# DEMANDE DE BREVET EUROPEEN

(11) **EP 2 708 331 A1**
(43) Date de publication de la demande: **19.03.2014**
(21) Numéro de dépôt: 13306273.7
(22) Date de dépôt: 17.09.2013
(51) Int. Cl.: B25J 5/00, A01G 23/095, B66F 11/00

(54) **Robot grimpeur**

(30) Priorité: 18.09.2012 FR 1258733
(71) Demandeur: Blum Cherchevsky, Eve Line, 25000 Besancon (FR)
(72) Inventeur: Blum, André, 25000 Besançon (FR)
(74) Mandataire: Poupon, Michel

(57) **Abrégé**

L'invention concerne un robot mobile le long d'un mât présentant un axe longitudinal, robot comprenant des moyens de déplacement le long du mât montés sur un bâti, les moyens de déplacement comprenant au moins deux éléments roulants destinés à être en contact avec le mât, au moins un élément roulant étant motorisé, le robot étant caractérisé en ce que :
• le bâti comprend au moins deux parties portant chacune au moins un élément roulant dont un axe de rotation est fixe par rapport à la dite partie du bâti,
• les parties du bâti sont positionnées de part et d'autre du mât, et sont associées entre elles par des moyens de rappel élastique de sorte que les éléments roulants sont plaqués contre le mât.

Le robot obtenu ainsi obtenu est simple mécaniquement, robuste, petit, léger, et peut être utilisé sur une grande variété de mâts, y compris des mâts dont la section varie fortement sur la longueur. De nombreuses applications peuvent ainsi être envisagées, notamment des interventions en milieu dense, en milieu urbain par exemple où l'espace autour des mâts est restreint ; le robot est particulièrement bien adapté pour des interventions nécessitant d'embarquer des matériels légers, jusqu'à quelques kilos.

## Description

### Domaine technique et état de l'art

L'invention concerne un robot mobile le long d'un mât, et plus particulièrement dans ce domaine un dispositif permettant d'effectuer diverses opérations en haut des mâts lorsqu'il est guidé par un opérateur restant au sol.

Depuis toujours les hommes installent des objets en haut de mâts de toute sorte, lampadaires d'éclairage public, fils d'un réseau de distribution d'énergie électrique ou d'un réseau de communication, antennes d'émission / réception d'un réseau de télécommunication, dispositifs de mesure, par exemple pour la surveillance de la pollution de l'air ou du respect de règles de comportement dans un lieu public (caméra, détecteur de vitesse, etc.), dispositif de fixation d'une voile de bateau, etc., ou interviennent sur de tels mâts pour des opérations d'entretien ou de maintenance, comme remplacer une ampoule d'un lampadaire d'éclairage public, dégager l'entrée d'une gouttière ou élaguer le tronc d'un arbre par exemple.

Une intervention humaine en haut d'un mât est toujours délicate. L'usage d'échelles, de nacelles élévatrices ou autre moyen technique équivalent exige des moyens logistiques importants qui ne sont pas toujours disponibles immédiatement, et exige le plus souvent la présence d'au moins deux opérateurs, le premier intervenant en hauteur et le deuxième sécurisant le travail du premier et les abords du lieu d'intervention. De telles interventions sont donc souvent onéreuses à réaliser et prennent parfois un temps incompatible avec certaines situations de crise (panne d'un réseau de distribution d'énergie électrique par exemple) ; elles sont de plus assez peu discrètes ce qui peut être incompatible avec certaines intervention sensibles (actions militaires par exemple).

Dans le domaine de l'exploitation forestière, pour limiter l'intervention humaine dans ce domaine, on a développé des robots grimpeurs, capables notamment de monter et de descendre seuls et sans glisser le long d'un tronc, sur commande d'un opérateur restant au sol. Les robots développés sont prévus généralement pour embarquer des outils lourds tels que des outils d'élagage ; ils comprennent un châssis de forme générale circulaire centré sur un axe longitudinal du tronc par trois roues réparties sur le pourtour du mât est pressées fortement contre le mât par des vérins hydrauliques ou pneumatiques commandés à partir de mesures fournies par des capteurs de pression ; les forces de réaction du mât, générées par le mât en réaction aux forces de pression imposées par les roues sur le mât, sont encaissées par le châssis et tendent à dissocier le châssis qui doit être dimensionné en conséquence. Ces robots sont donc en pratique lourds, coûteux et gros consommateurs énergétiques.

### Description de l'invention

L'invention propose un nouveau robot mobile le long d'un mât, ne présentant pas tout ou partie des inconvénients des robots décrits ci-dessus. Plus précisément l'invention propose un robot mobile le long d'un mât présentant un axe longitudinal, robot comprenant des moyens de déplacement le long du mât montés sur un bâti, les moyens de déplacement comprenant au moins deux éléments roulants destinés à être en contact avec le mât, au moins un élément roulant étant motorisé.

Le robot selon l'invention est caractérisé en ce que :
- le bâti comprend au moins deux parties portant chacune au moins un élément roulant dont l'axe de rotation est fixe par rapport à la dite partie du bâti,
- les parties du bâti sont montées de part et d'autre du mât rotatives l'une par rapport à l'autre, et sont associées entre elles par des moyens de rappel élastique de sorte que les éléments roulants sont plaqués contre le mât.

Deux éléments roulants en combinaison avec les moyens de rappel élastique suffisent pour assurer la stabilité longitudinale du robot, c'est-à-dire l'empêcher de glisser. Le robot est capable de monter et descendre le long d'un mât en roulant, sans glisser. Le robot est maintenu autour du mât par serrage, par pression des éléments roulants contre le tronc. Mais le châssis est en plusieurs parties et la pression sur le mât est imposée par les moyens de rappel élastiques associant les parties du châssis, de sorte que les forces de réaction du mât ne sont plus encaissées par le châssis mais surtout par les moyens de rappel élastique. Le châssis est ainsi beaucoup moins sollicité et peut donc être dimensionné pour être plus léger. De plus, contrairement à des moyens de pression associant des vérins, des capteurs de pression et des moyens de commande associés, les moyens de rappel élastique utilisés dans l'invention peuvent être beaucoup plus simples à mettre en oeuvre, comme on le verra mieux plus loin dans des exemples.

Egalement, par rapport aux robots antérieurs, comprenant un cadre fixe et des moyens de type vérins hydrauliques ou pneumatiques pressés contre le mât, le cadre en plusieurs parties et les moyens élastiques qui les associent permettent à un robot selon l'invention de se déplacer le long de mâts présentant une conicité bien plus forte, et donc une différence entre le plus grand diamètre et le plus petit diamètre du mât bien plus grande.

Egalement, de par sa forme et notamment l'utilisation d'un bâti en deux parties et de deux éléments roulants seulement, le robot selon l'invention peut être utilisé d'une part sur des mâts de section de formes très diverses, y compris sur des mâts de sections polygonales, carrées ou rectangulaires notamment, et d'autre part sur des mâts tronconiques, dont la section varie sur la longueur du mât, y compris des mâts ayant un angle au sommet important (ie une forte conicité) ; le robot selon l'invention peut ainsi aisément être utilisé pour l'ascension de candélabres d'éclairage public.

La première partie du bâti peut comprendre en complément deux éléments roulants ayant chacun au moins un point de contact avec une surface extérieure du mât, localisés respectivement dans un premier plan transversal et dans un troisième plan transversal différent du premier plan transversal. Dit autrement les deux éléments roulants sont positionnés l'un au dessus de l'autre lorsque le robot est positionné sur un mât vertical. Ceci empêche un basculement du robot, une rotation autour d'un axe parallèle aux axes de rotation des deux éléments roulants en réaction à un effort de traction de la première partie par les moyens de rappel élastique, ce qui apporte une meilleure stabilité au robot. Cette stabilité est encore améliorée si un élément roulant de la deuxième partie a au moins un point de contact avec la surface extérieure du mât localisé dans un deuxième plan transversal s'étendant entre le premier plan transversal et le troisième plan transversal.

De préférence, l'élément roulant motorisé est entraîné en rotation par un moteur porté par la partie du bâti portant l'élément roulant motorisé. On limite ainsi les difficultés de liaison mécanique entre le moteur et l'élément roulant qu'il entraîne en mouvement.

De préférence encore, l'élément roulant est entraîné en rotation par friction d'un galet sur l'élément roulant, ledit galet étant monté rotatif sur un axe de rotation du moteur. Cette solution présente l'avantage de limiter le nombre de pièces mécaniques, et donc d'alléger encore le robot ; également, cette solution ne demande aucun entretien dans le temps, une éventuelle usure dans le temps du galet d'entraînement ou des éléments roulant étant compensée de fait par les moyens de rappel élastiques.

Différentes réalisations des éléments roulants sont envisageables, seules ou en combinaison. Par exemple un élément roulant peut comprendre simplement un galet ayant un axe de rotation ; cette solution a l'avantage de la simplicité. Un élément roulant peut aussi comprendre une paire de galets ayant le même axe de rotation ; cette solution un peu plus complexe que la précédente apporte une stabilité du robot. Un élément roulant peut encore comprendre une pluralité de galets ou de paires de galets positionnés les uns par rapport aux autres de sorte que tous les galets soient tangents à une même droite, les galets étant agencés sur un support monté rotatif par rapport à une partie du bâti selon un axe parallèle aux axes de rotation des galets. Ce mode de réalisation apporte une stabilité complémentaire, particulièrement intéressante dans le cas d'un robot susceptible de grimper à de mâts présentant des variations importantes de section. De manière générale, tous les axes de rotation sont orthogonaux à l'axe longitudinal du mât.

Dans un mode de réalisation, les deux parties du bâti sont sensiblement planes et portent chacune un ou plusieurs éléments roulants dont les axes sont tous sensiblement parallèles à la partie du bâti qui les porte. Le bâti est ainsi facile à réaliser, et également très léger.

Egalement les deux parties du bâti peuvent être montées articulées l'une par rapport à l'autre. Ceci apporte une stabilité complémentaire au robot, en enlevant un degré de liberté dans les mouvements d'une partie par rapport à l'autre.

Selon un mode de réalisation particulièrement bien adapté à un usage sur des mâts à forte conicité, un axe de rotation des deux parties l'une par rapport à l'autre est sensiblement orthogonal à l'axe longitudinal. Le bâti peut comprendre par exemple deux pattes de fixation, comprenant chacune une première extrémité reliée à un bord longitudinal de la première partie du bâti et une deuxième extrémité reliée à un bord longitudinal de la deuxième partie du bâti,
- les premières extrémités des pattes de fixation étant en rotation libre par rapport à la première partie du bâti selon un axe orthogonal à l'axe longitudinal du mât et / ou
- les deuxièmes extrémités des pattes de fixation étant en rotation libre par rapport à la deuxième partie du bâti selon un axe orthogonal à l'axe longitudinal du mât.

Selon un autre mode de réalisation particulièrement adapté aux mâts de diamètres à faible variation, les deux parties sont montées rotatives l'une par rapport à l'autre selon un axe de rotation (X1, X2) sensiblement parallèle à l'axe longitudinal. Pour cela, les deux parties ont par exemple une forme en portion de cône et sont articulées entre elles par une charnière. Les deux parties pouvant être solidaires l'une de l'autre ou solidarisées à l'avance, la mise en place du robot autour d'un mât est facilitée.

De préférence, les deux parties du bâti sont agencées l'une par rapport à l'autre de sorte que le centre de gravité du robot soit localisé dans un plan transversal à une distance de l'axe longitudinal du mât inférieure à deux à trois fois un rayon du mât dans le dit plan transversal, et de préférence inférieure au rayon du mât dans le dit plan transversal. La charge du robot est également répartie sur le bâti de sorte à conserver un centre de gravité au centre, c'est-à-dire un robot le plus équilibré possible.

En fonction de l'application envisagée, le robot peut encore comprendre, solidaires du bâti :
- des moyens d'émission et / ou de réception de signaux de commande ou de signaux de données, et / ou
- des moyens pour recevoir sur le bâti ou solidariser au bâti un dispositif fonctionnel à fixer en haut du mât ou à descendre en bas du mât, et / ou
- un bras robotisé agencé pour fixer un dispositif fonctionnel en haut du mât ou effectuer des opérations de maintenance sur un dispositif fonctionnel préalablement fixé en haut du mât, et / ou
- un moyen de commande de l'élément roulant motorisé, des moyens d'émission et / ou de réception, du bras robotisé, et / ou
- une source d'énergie ou des moyens pour produire une énergie nécessaire au fonctionnement des moyens d'émission et / ou de réception, du bras robotisé, du moyen de commande.

De nombreuses applications peuvent ainsi être envisagées, notamment des interventions en milieu dense, en milieu urbain par exemple où l'espace autour des mâts est restreint ; le robot est particulièrement bien adapté pour des interventions nécessitant d'embarquer des matériels légers, jusqu'à quelques kilos.

### Brève description des figures

L'invention sera mieux comprise, et d'autres caractéristiques et avantages de l'invention apparaîtront à la lumière de la description qui suit d'exemples de robots selon l'invention. Ces exemples sont donnés à titre non limitatif. La description est à lire en relation avec les dessins annexés dans lesquels
- les figures 1a-1b, 2a-2b, 3a-3c, 4a sont des schémas fonctionnels de différents robots selon l'invention,
- les figures 5a-5c montrent en détail un prototype mis en oeuvre de l'invention.

Pour tout ce qui suit, on définit les termes et les éléments suivants. L'axe longitudinal est l'axe du mât. Un axe radial est un axe perpendiculaire à l'axe longitudinal et donc coupant l'axe longitudinal. Un axe orthogonal à l'axe longitudinal est un axe parallèle à une droite perpendiculaire à l'axe longitudinal. Un plan transversal est un plan perpendiculaire à l'axe longitudinal du mât.

### Description de modes de réalisation de l'invention

Comme précédemment, l'invention concerne un robot mobile le long d'un mât présentant un axe longitudinal, robot comprenant des moyens de déplacement le long du mât montés sur un bâti, les moyens de déplacement comprenant au moins deux éléments roulants destinés à être en contact avec le mât, au moins un élément roulant étant motorisé. Le robot est caractérisé en ce que :
- le bâti comprend au moins deux parties portant chacune au moins un élément roulant dont un axe de rotation est fixe par rapport à la dite partie du bâti,
- les parties du bâti sont positionnées de part et d'autre du mât, et sont associées entre elles par des moyens de rappel élastique de sorte que les éléments roulants sont plaqués contre le mât.

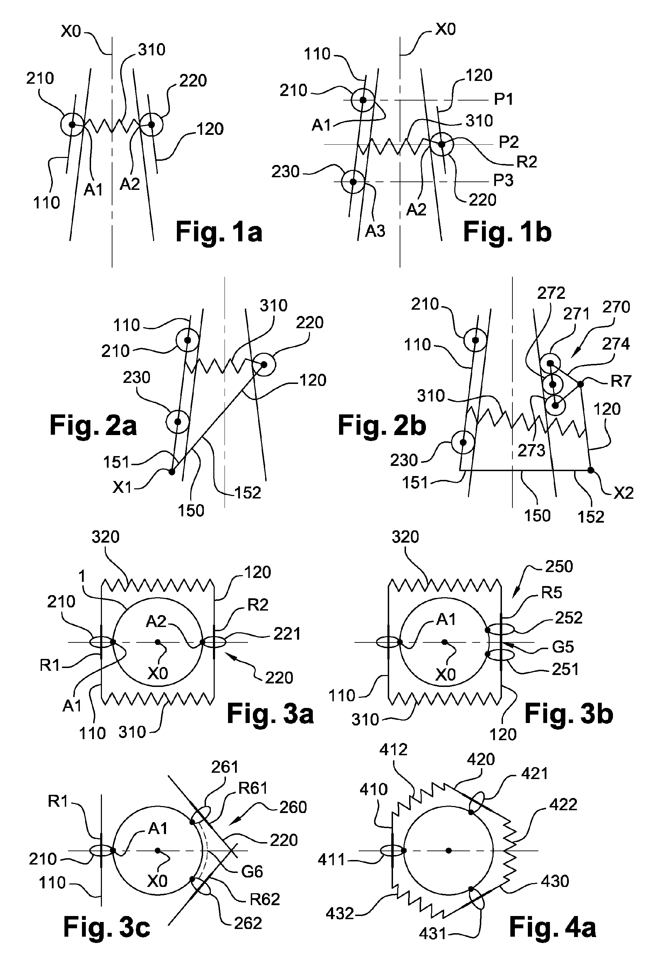

Un tel robot est représenté schématiquement sur les figures 1a-1b, 2a-2b. Le bâti du robot comprend deux parties 110, 120 positionnés de part et d'autre de l'axe longitudinal X0 du mât 1.

Dans l'exemple de la figure 1a, chaque partie 110, 120 du bâti porte un élément roulant 210, 220, éléments roulants positionnés de sorte que les points de contact A1, A2 des deux éléments roulants 210, 220 avec une surface extérieure du mât soient positionnés sur un diamètre du mât. Des moyens de rappel élastiques 310, 320 rapprochent les deux parties du bâti, et pressent en conséquence les deux éléments roulants contre le mât, empêchant ainsi le robot de glisser le long du mât.

Dans l'exemple de la figure 1b, une première partie 110 du bâti porte deux éléments roulants 210, 230 ayant chacun au moins un point de contact A1, A3 avec la surface extérieure du mât ; les points de contact A1, A3 sont localisés respectivement dans un premier plan transversal P1 et dans un troisième plan transversal P3 différent du premier plan transversal P1. Ceci empêche tout basculement de la première partie du bâti selon un axe de rotation parallèle à un axe de rotation d'un des éléments roulants 210, 230. L'équilibre du robot le long du mât est ainsi amélioré, notamment pour certains modes de réalisation des parties du bâti et des moyens de rappel élastique, comme on le verra mieux plus loin.

Dans l'exemple de la figure 1b également, la deuxième partie comprend un seul appui roulant 220 dont le point de contact A2 avec la surface extérieure du mât est localisé dans un deuxième plan transversal P2 s'étendant entre le premier plan transversal P1 et le troisième plan transversal P3. Les forces de pression appliquées aux points de contact A1, A2, A3 par les éléments roulants 210, 220, 230 sont ainsi mieux réparties sur la hauteur du mât, ce qui entraîne un meilleur équilibre de l'ensemble.

Les deux parties 110, 120 du bâti peuvent être montées articulées l'une par rapport à l'autre selon un axe de rotation sensiblement orthogonal à l'axe longitudinal. Ceci empêche notamment une rotation d'une partie du bâti par rapport l'autre partie selon un axe autre que l'axe prévu. On supprime ainsi un degré de mouvement d'une partie du bâti par rapport à l'autre, et on améliore l'équilibre de l'ensemble.

Pour cela, en plus de la première partie 110 et de la deuxième partie 120, le bâti comprend également deux pattes de fixation 140, 150, comprenant chacune une première extrémité 141, 151 reliée à un bord longitudinal de la première partie 110 du bâti et une deuxième extrémité 142, 152 reliée à un bord longitudinal de la deuxième partie 120 du bâti.

Dans l'exemple de la figure 2a (une seule patte de fixation 150 visible en vue de face), les premières extrémités 141, 151 des pattes de fixation sont en rotation libre par rapport à la première partie 110 du bâti selon un axe X1 orthogonal à l'axe longitudinal du mât X0, et les deuxièmes extrémités 142, 152 des pattes de fixation sont fixées (par exemple soudées ou vissées) à la deuxième partie 120 du bâti, ici dans le prolongement de la deuxième partie 120 du bâti.

Dans l'exemple de la figure 2b (une seule patte de fixation 150 visible en vue de face), les deuxièmes extrémités 142, 152 des pattes de fixation sont en rotation libre par rapport à la deuxième partie 120 du bâti selon un axe X2 orthogonal à l'axe longitudinal X0 du mât, et les premières extrémités 141, 151 des pattes de fixation sont fixées rigidement à la première partie 110 du bâti.

Différents modes de réalisation des éléments roulants peuvent être envisagés. A titre d'exemple, l'élément roulant 220 (figure 3a) comprend un galet 221 monté rotatif autour d'un axe R2 orthogonal à l'axe longitudinal X0 (axe du mât). L'élément roulant 210 est réalisé de manière similaire.

L'élément roulant 250 (figure 3b) comprend une paire de galets, c'est-à-dire deux galets 251, 252, montés rotatifs autour d'un même axe R5 orthogonal à l'axe X0 et fixe par rapport à la partie 120 du bâti qui le supporte. Les deux galets sont positionnés de sorte que le point de contact A1 de l'élément roulant 210 sur la surface extérieure du mât et le centre de gravité G5 de l'élément roulant 250 soient dans un même plan (représenté en pointillés sur la figure 3b) passant par l'axe X0. Les deux galets 251, 252 sont positionnés de préférence assez proches l'un de l'autre. L'utilisation de deux galets ainsi montés (au lieu d'un seul galet) améliore la stabilité du robot en limitant les possibilités de basculement du robot selon un axe radial passant par le centre de gravité G5 de l'élément roulant 250. De préférence, les points de contact des deux galets 251, 252 sur la surface extérieure du mât forment un angle inférieur à 20°, mesuré par rapport à l'axe X0 ; au delà de 20°, l'axe R5 pourrait toucher le mât lors d'une ascension du robot, en particulier sur un mât tronconique présentant une petite section en haut du mât.

L'élément roulant 260 (figure 3c) comprend deux galets 261, 262 montés articulés autour de deux axes R61, R62 distincts, mais orthogonaux à l'axe X0, et fixes par rapport à la partie 120 du bâti qui les supporte. Les deux galets 261, 262 sont positionnés de sorte que le point de contact A1 de l'élément roulant 210 sur la surface extérieure du mât et le centre de gravité G6 de l'élément roulant 260 soit dans un même plan (représenté en pointillés sur la figure 3c) passant par l'axe X0. Les deux galets peuvent être positionnés plus éloignés l'un de l'autre que dans l'exemple précédent. Dans une position la plus équilibrée possible, les points de contact des deux galets sur la surface extérieure du mât forment un angle de 120° par rapport à l'axe X0. La stabilité du robot est encore améliorée.

L'élément roulant 270 (figure 2b) comprend une pluralité de galets 271, 272, 273 positionnés les uns par rapport aux autres de sorte que le premier galet 271 est entraîné, par exemple par friction, par un moteur (non représenté) ; le deuxième galet 272, intermédiaire, est entraîné en rotation par le premier galet 271 ; le troisième galet 273 est entraîné en rotation par le deuxième galet 272 ; les deux galets 271, 273 d'extrémité roulent sur le mât pour faire avancer le robot ; le galet intermédiaire 272 sert à transmettre le mouvement de rotation du premier galet au troisième galet. Les galets sont agencés sur un support 274 monté rotatif par rapport à une partie 120 du bâti selon un axe R7 parallèle aux axes de rotation des galets, tous orthogonaux à l'axe longitudinal X0 du mât.

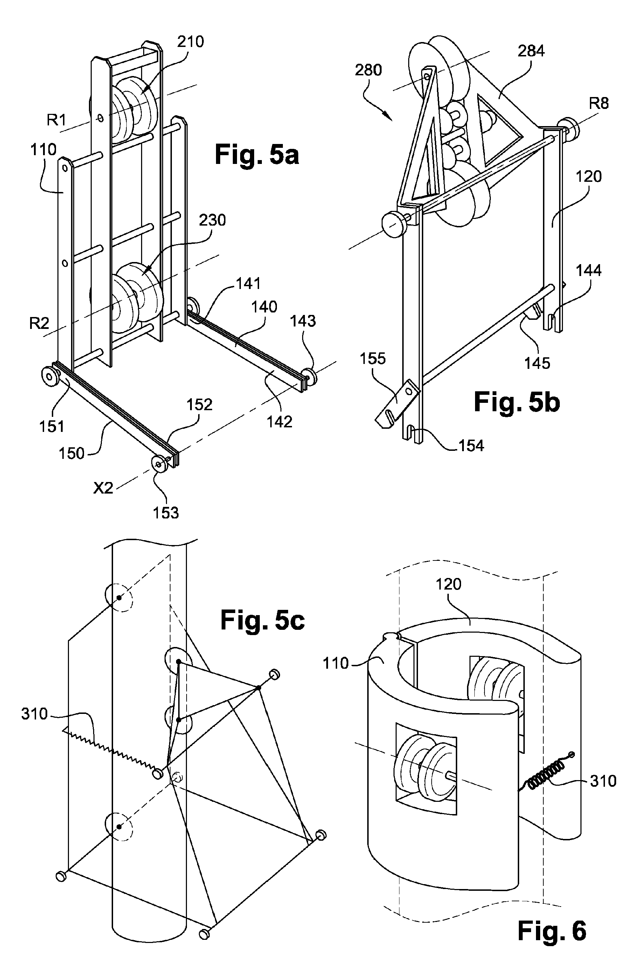

L'élément roulant 280 (figure 5b) est une combinaison des éléments roulants 250 et 270 ; il comprend une pluralité de paires de galets montés sur un support rotatif par rapport à la deuxième partie 120 du bâti.

Pour entraîner en mouvement le robot, l'un des éléments roulants doit être motorisé. Si plusieurs éléments roulants sont motorisés, ils doivent être entraînés à la même vitesse. Un moteur et des moyens de commande appropriés (non représentés) sont fixés sur le bâti, de préférence sur la partie du bâti portant l'élément roulant à entraîner.

Les moyens de rappel élastique sont réalisés le plus simplement possible, par des moyens mécaniques simples et connus. Des prototypes de robots ont notamment été réalisés avec succès avec des câbles élastiques ou des ressorts. Le positionnement et le nombre de ces moyens de rappel élastique sont choisis pour obtenir un robot le plus stable possible le long du mât.

Par exemple, dans le cas de la figure 1a, les moyens de rappel élastique sont fixés sur les parties du bâti sensiblement dans un même plan transversal, au niveau des axes de rotation des éléments roulants. Dans le cas de la figure 1b, les moyens élastiques sont fixés sur la première partie 110 entre les axes de rotation des deux éléments roulants 210, 230.

Dans le cas des figures 1a-1b, 3a-3c, deux moyens élastiques sont utilisés, de part et d'autre du mât, pour éviter une rotation des parties 110, 120 autour de l'axe X0. Dans le cas des figures 2a-2b, un seul moyen élastique peut être suffisant pour empêcher cette rotation, du fait que les deux parties 110, 120 sont articulées l'une par rapport à l'autre.

Les deux parties du bâti sont agencées l'une par rapport à l'autre de sorte qu'un centre de gravité du robot soit localisé le plus proche possible de l'axe du mât pour obtenir un robot le plus stable possible. Le centre de gravité peut être localisé par exemple dans un plan transversal à une distance de l'axe longitudinal du mât inférieure à deux à trois fois un rayon du mât dans le dit plan transversal, et de préférence inférieure au rayon du mât dans le dit plan transversal. Lorsqu'une charge est installée sur le robot, elle est répartie sur les parties du bâti de sorte que le centre de gravité reste le plus proche possible de l'axe du mât.

Les figures précédemment décrites montrent des robots dont le bâti comprend deux parties associées par des moyens de rappel élastique. Des prototypes ont montré que le robot fonctionne bien. Mais d'autres réalisations sont envisageables, par exemple celle de la figure 4a, dans laquelle le bâti comprend trois parties 410, 420, 430 portant chacune au moins un élément roulant 411, 421, 431 dont un axe de rotation est fixe par rapport à la dite partie du bâti. Les parties du bâti sont positionnées de part et d'autre du mât, réparties sur le pourtour du mât, et sont associées entre elles par des moyens 412, 422, 432 de rappel élastique de sorte que les éléments roulants sont plaqués contre le mât.

Les figures 5a-5c montrent un prototype d'un robot selon l'invention, réalisé avec des moyens mécaniques simples, et qui a montré son efficacité sur des mâts tels que des pieds de candélabre d'éclairage public.

La première partie 110 (figure 5a) du bâti a la forme générale d'un cadre métallique plan, de largeur un peu supérieure au plus grand diamètre d'un mât à grimper. La première partie 110 porte deux éléments roulants 210, 230 positionnés l'un sous l'autre selon un axe longitudinal. Les deux éléments roulants 210, 230 sont constitués chacun de deux galets montés rotatifs sur un même axe de rotation, R1, R3.

La deuxième partie 120 (figure 5b) du bâti a également la forme générale d'un cadre métallique plan et porte un élément roulant 280, qui comprend quatre paires de galets agencées sur un support 284 monté rotatif par rapport à la partie 120 du bâti selon un axe R8 parallèle aux axes de rotation des galets, tous orthogonaux à l'axe longitudinal X0 du mât. Les deux paires centrales de galets placées entre les paires d'extrémité ont un diamètre plus petit de façon à ne pas rouler sur le mât : les paires centrales de galets servent ainsi à entraîner en rotation les paires de galets d'extrémité qui roulent sur le mât.

Des pattes de fixation 140, 150 articulent les deux parties 110, 120 l'une par rapport à l'autre. Les premières extrémités 141, 142 des pattes de fixation sont vissées sur les bords longitudinaux de la première partie, et s'étendent perpendiculairement au plan du cadre de la partie 110. Aux deuxièmes extrémités 142, 152 des pattes 140, 150 sont fixés des pions 143, 153 destinés à être positionnés dans des encoches 144, 154 prévues à cet effet aux extrémités basses des bords longitudinaux de la deuxième partie 120 pour former l'articulation entre la première et la deuxième partie 110, 120. Des moyens de verrouillage 145, 155 viennent en complément fermer les encoches 144, 154 pour empêcher la séparation des deux parties 110, 120, qui sont ainsi montées rotatives l'une par rapport à l'autre selon l'axe X2 passant par les deux pions 143, 153.

La structure du bâti est très légère. Les pattes de fixation 140, 150 font partie du bâti et elles peuvent être utilisées pour supporter la charge du robot, la charge peut ainsi être mieux répartie, sur tout le pourtour du mât pour avoir un centre de gravité du robot chargé le plus proche possible de l'axe du mât et donc un robot chargé le plus stable possible le long du mât.

Un unique moyen élastique 310 est fixé aux extrémités hautes des deux parties. Ceci est suffisant du fait de l'articulation des deux parties du bâti.

La figure 6 montre le bâti d'un autre prototype d'un robot selon l'invention, également réalisée à partir de moyens mécaniques simples. Ce deuxième prototype est plus facile à mettre en place autour d'un mât, du fait de l'articulation entre les deux parties du bâti, comme on le verra ci-dessous. Ce montage est particulièrement bien adapté pour un mât ayant une section peu variable entre les deux extrémités du mât.

Les deux parties 110, 120 ont une forme en portion de cylindre, ou portion de cône, et sont articulées entre elles par une charnière s'étendant le long d'un premier bord longitudinal de chaque partie. Un moyen de rappel élastique 310 est agencé pour rapprocher et maintenir le deuxième bord longitudinal de chaque partie. Les éléments roulant (non représentés) sont fixés sur chaque partie, tels que décrits dans les exemples précédents.

### NOMENCLATURE

| | | | |
|---|---|---|---|
| X0 : | axe longitudinal du mât | | |
| X1, X2 : | | axes orthogonaux à l'axe X0 (articulation entre première et deuxième partie du bâti) | |
| 110, 120 : | deux parties du bâti | | |
| 140, 150 : | deux pattes de fixation | | |
| | | 141, 151 : | premières extrémités des pattes de fixation |
| | | 142, 152 : | deuxièmes extrémités des pattes de fixation |
| | | 143, 153 | pions |
| | | 144, 154 | encoches |
| | | 145, 155 | moyens de verrouillage |
| 210, 220: | deux éléments roulants | | |
| | | A1, A2 | points de contact sur le mât |
| | | P1, P2 | plans transversaux passant par A1, A3 respectivement |
| | | R1, R2 | axes de rotation des éléments roulants 210, 220 |
| 230: | élément roulant | | |
| | | A3 : | point de contact de l'élément roulant 230 sur le mât |
| | | P3 : | plan transversal passant par A3 |
| 250 : | élément roulant comprenant | | |
| | | 251,252: | deux galets |
| | | R5 : | axe de rotation commun au deux galets 251, 252 (une paire de galets) |
| | | G5 : | centre de gravité de l'élément 250 |
| 260 : | élément roulant | | |
| | | 261, 262 : | deux galets, |
| | | R61, R62 : | axes de rotation (distincts) des galets 261, 262 |
| 270 : | élément roulant | | |
| | | 271, 272, 273 | galets |
| | | 274 : | support des galets |
| | | R7 : | axe de rotation du support 274 |
| 280 : | élément roulant | | |
| 310, 320 : | moyens de rappel élastique | | |
| | | | |
| 410, 420, 330 : | trois parties | | |
| 411, 421, 431 : | éléments roulants portés par les trois parties 410, 420, 430 | | |
| 412, 422, 432 : | moyens de rappel élastique | | |

## Revendications

1. Robot mobile le long d'un mât présentant un axe longitudinal (X0), robot comprenant des moyens de déplacement le long du mât montés sur un bâti, les moyens de déplacement comprenant au moins deux éléments roulants (210, 220) destinés à être en contact avec le mât, au moins un élément roulant étant motorisé, le robot étant **caractérisé en ce que** :
• le bâti comprend au moins deux parties (110, 120) portant chacune au moins un élément roulant (210, 220, 230, 250, 260, 270, 280, 411, 421, 431) dont un axe de rotation (R1, R2, R3, R5, R61, R62, R7, R8) est fixe par rapport à la dite partie du bâti,
• les parties (110, 120) du bâti sont montées de part et d'autre du mât rotatives l'une par rapport à l'autre, et sont associées entre elles par des moyens de rappel élastique (310, 320, 412, 422, 432) de sorte que les éléments roulants sont plaqués contre le mât.

2. Robot selon la revendication 1, dans lequel deux éléments roulants (210, 230) d'une première partie (210) du bâti ont chacun au moins un point de contact (A1, A3) avec une surface extérieure du mât, localisés respectivement dans un premier plan transversal (P1) et dans un troisième plan transversal (P3) différent du premier plan transversal (P1).

3. Robot selon la revendication 2 dans lequel un élément roulant (220) de la deuxième partie (120) a au moins un point de contact (A2) avec la surface extérieure du mât localisé dans un deuxième plan transversal (P2) s'étendant entre le premier plan transversal (P1) et le troisième plan transversal (P3).

4. Robot selon l'une des revendications précédentes, dans lequel l'élément roulant motorisé est entraîné en rotation par un moteur porté par la partie du bâti portant l'élément roulant motorisé.

5. Robot selon la revendication précédente dans lequel l'élément roulant est entraîné en rotation par friction d'un galet sur l'élément roulant, ledit galet étant monté rotatif sur un axe de rotation du moteur.

6. Robot selon l'une des revendications précédentes, dans lequel un ou chaque élément roulant comprend :
• un galet roulant (221) sur le mât selon un axe de rotation, ou
• une paire de galets (251, 252) roulant sur le mât selon un même axe de rotation
• une pluralité de galets (271, 273) roulant sur le mât selon des axes de rotation différents, et entraînés entre eux par au moins un galet intermédiaire (272)
• les galets étant agencés sur un support (274, 284) monté rotatif par rapport à une partie du bâti selon un axe parallèle aux axes de rotation des galets,
• tous les axes de rotation étant orthogonaux à l'axe longitudinal du mât.

7. Robot selon l'une des revendications précédentes, dans lequel les deux parties du bâti sont sensiblement planes et portent chacune un ou plusieurs éléments roulants dont les axes sont tous sensiblement parallèles à la partie du bâti qui les porte.

8. Robot selon l'une des revendications précédentes, dans lequel les deux parties (110, 120) du bâti sont montées rotatives l'une par rapport à l'autre selon un axe de rotation (X1, X2) sensiblement orthogonal à l'axe longitudinal.

9. Robot selon la revendication 8 en combinaison avec la revendication 7 dans lequel le bâti comprend également deux pattes de fixation (140, 150), comprenant chacune une première extrémité (141, 151) reliée à un bord longitudinal de la première partie du bâti et une deuxième extrémité (142, 152) reliée à un bord longitudinal de la deuxième partie du bâti,
• les premières extrémités des pattes de fixation étant en rotation libre par rapport à la première partie du bâti selon un axe orthogonal à l'axe longitudinal du mât et / ou
• les deuxièmes extrémités des pattes de fixation étant en rotation libre par rapport à la deuxième partie du bâti selon un axe orthogonal à l'axe longitudinal du mât.

10. Robot selon l'une des revendications 1 à 6, dans lequel les deux parties (110, 120) du bâti sont montées rotatives l'une par rapport à l'autre selon un axe de rotation (X1, X2) sensiblement parallèle à l'axe longitudinal.

11. Robot selon la revendication précédente dans lequel les deux parties ont une forme en portion de cône et sont articulées entre elles par une charnière.

12. Robot selon l'une des revendications précédentes dont les deux parties sont agencées l'une par rapport à l'autre de sorte qu'un centre de gravité du robot soit localisé dans un plan transversal à une distance de l'axe longitudinal du mât inférieure à deux à trois fois un rayon du mât dans le dit plan transversal, et de préférence inférieure au rayon du mât dans le dit plan transversal.

13. Robot selon l'une des revendications précédentes, comprenant également, solidaires du bâti :
• des moyens d'émission et / ou de réception de signaux de commande ou de signaux de données, et / ou
• des moyens pour recevoir sur le bâti ou pour solidariser au bâti un dispositif fonctionnel à fixer en haut du mât ou à descendre en bas du mât, et / ou
• un bras robotisé agencé pour fixer un dispositif fonctionnel en haut du mât ou effectuer des opérations de maintenance sur un dispositif fonctionnel préalablement fixé en haut du mât, et / ou
• un moyen de commande de l'élément roulant motorisé, des moyens d'émission et / ou de réception, du bras robotisé, et / ou
• une source d'énergie ou des moyens pour produire une énergie nécessaire au fonctionnement des moyens d'émission et / ou de réception, du bras robotisé, du moyen de commande.
